# EUROPEAN PATENT SPECIFICATION

(11) **EP 3 515 174 B1**
(45) Date of publication and mention of the grant of the patent: **30.09.2020**
(21) Application number: 17787606.7
(22) Date of filing: 29.08.2017
(51) Int. Cl.: A01D 41/12, A01D 75/18, A01D 61/00

(54) **AGRICULTURAL HARVESTER WITH SUPPLEMENTAL GROUND SUPPORT FOR TRANSPORT**
LANDWIRTSCHAFTLICHE ERNTEMASCHINE MIT ZUSÄTZLICHER BODENUNTERSTÜTZUNG FÜR DEN TRANSPORT
MOISSONNEUSE AGRICOLE AVEC SUPPORT AU SOL SUPPLÉMENTAIRE POUR LE TRANSPORT

(30) Priority: 26.09.2016 US 201662399808 P
(43) Date of publication of application: 31.07.2019
(73) Proprietor: AGCO Corporation, Duluth, GA (US)
(72) Inventor: BIGGERSTAFF, Joseph, M., Hesston KS 67062-0969 (US); DUCROQUET, Frederic, Breganza 36042 (IT)
(74) Representative: AGCO Intellectual Property Department
(86) International application number: PCT/IB2017/001043
(87) International publication number: WO 2018/055442

(56) References cited:
- EP-A1- 1 269 825
- US-A1- 2015 271 999
- US-B2- 9 125 343

## Description

### Field of Invention

The invention relates to agricultural harvesters and to the provision of supplemental ground support when operating in a transport mode on public highways.

### Background of the Invention

Self-propelled agricultural harvesters, such as combine harvesters and forage harvesters, are increasing in size and weight as capacities are increased. Due to national legislation in some countries, larger harvesters are approaching the legal maximum axle load limit. As a result, manufacturers are looking for solutions to reduce the weight of the machines and/or provide supplemental ground support to spread the weight and maintain axle loadings within legislative limits.

One solution is to introduce additional axles. Permanent additional axles can reduce the manoeuvrability of the vehicle and so deployable axles have been considered. US-9,125,343 discloses an example deployable axle which is pivotally mounted to the underside of a harvester feederhouse, wherein the axle is brought into contact with the ground in a transport mode. Such an assembly is complex and expensive to implement.

Document EP 1 269 825 A1 discloses an agricultural harvester according to the preamble of claim 1.

### Summary of the Invention

In accordance with a first aspect of the invention there is provided an agricultural harvester comprising:
- a chassis;
- a feederhouse pivotally mounted to the chassis;
- a header for attachment to a front side of the feederhouse;
- a pair of wheel assemblies;
- first and second pairs of wheel assembly attachment means provided on the feederhouse and the header respectively allowing selective attachment of the wheel assemblies to one of the feederhouse and header.

The invention exploits the common provision of header-mounted wheels for supplementing ground support for the harvester during transport. Wheels are commonly provided on the header in a harvesting mode to bear a portion of the header weight and to better control header height. The inventors recognise that when in a transport configuration the header is detached from the feederhouse and carried on a separate trailer. In known arrangements, these header-mounted wheels are redundant when the header is carried on the trailer during transport. However, in accordance with the invention, means are provided to permit an operator to transfer the wheels from the header to the feederhouse and provide supplementary ground support during transport.

Advantageously, the solution offered by the invention exploits existing parts, albeit in a different configuration, to provide a simple supplemental ground support. Although not automated, an operator need only detach the wheel assemblies from the header and reattach to the feederhouse when switching from harvest to transport mode, and vice versa.

In a preferred embodiment of the invention each wheel assembly comprises a wheel mounted to a spindle, wherein each wheel assembly attachment means is configured to receive and retain the spindle. The wheel may be configured as a simple castor wheel, wherein the spindle is upright when mounted to the header.

The wheel assembly attachment means may simply comprise a sleeve secured to one of the header and feederhouse, the sleeve being configured to receive the spindle of a wheel assembly. Means to lock each spindle in the respective sleeve may also be provided, for example in the form of a pin. Alternatively, the wheel assembly attachment means may comprise a pair of laterally-extending pins which are received by, and retain in, corresponding bores provided in the wheel assemblies.

The feederhouse may comprise a main housing and a tilt frame mounted to a front side of the main housing, wherein the tilt frame is mounted to allow an attached header to tilt with respect to the chassis, and wherein the first pair of wheel assembly attachment means are provided on the tilt frame. Advantageously, by mounting the wheels to the tilt frame, continuous contact between the wheels and rough terrain is easier to achieve. In one embodiment, hydraulic control apparatus configured to control the tilt angle of the tilt frame may operate in a float mode so that the wheels follow the ground to a better extent.

In a harvest mode the wheel assemblies are attached to the header and, in one embodiment, may each serve as gauge wheels to adjust the cutting height of the header. In this case, the header may comprise a pair of adjustable gauge wheel support assemblies mounted to outer ends of the header, wherein the second wheel assembly attachment means form part of the gauge wheel support assemblies. The adjustable gauge wheel support assemblies may comprise suitable means to lower and raise the height of the attached wheels during the harvest operation. For example, respective hydraulic cylinders may be provided to control said height.

In accordance with a second aspect of the invention there is provided a method of preparing an agricultural harvester for a transport mode, the harvester comprising a chassis, a feederhouse pivotally mounted to the chassis, and a header for attachment to a front side of the feederhouse, the method comprising the steps of:
- detaching the header from the feederhouse;
- removing a pair of wheel assemblies from the header; and,
- mounting the wheel assemblies to the feederhouse.

### Brief Description of the Drawings

Further advantages of the invention will become apparent from reading the following description of specific embodiments with reference to the appended drawings in which:-
Figure 1 is a schematic side view of a combine harvester which is suitable for embodying aspects of the invention;
Figure 2 is a schematic front perspective view of a feederhouse in accordance with a first embodiment of the invention, the feederhouse shown with a pair of wheel assemblies attached;
Figure 3 is a side elevation of the feederhouse of Figure 2, shown together with a detached header and a pair of wheel assemblies attached to the feederhouse;
Figure 4 is a rear perspective view of part of the feederhouse and header of Figure 3, shown with the header attached to the feederhouse and with the wheel assemblies attached to the header;
Figure 5 is a left-side perspective view of part of a combine harvester in accordance with a second embodiment of the invention; and,
Figure 6 is a flow chart illustrating an example method in accordance with an aspect of the invention.

Corresponding reference characters indicate corresponding parts throughout the views of the drawings.

### Detailed Description of specific embodiments of the Invention

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. But to the contrary, the invention includes numerous alternatives, modifications and equivalents as will become apparent from consideration of the following detailed description.

In the foregoing description relative terms such as transverse, lateral, longitudinal, front and rear are made in relation to the normal forward direction of travel of the harvester described. The terms inboard and outboard are used in relation to a hypothetical longitudinal centre line of the harvester wherein an "outboard" end is further away from the centre line than an "inboard" end.

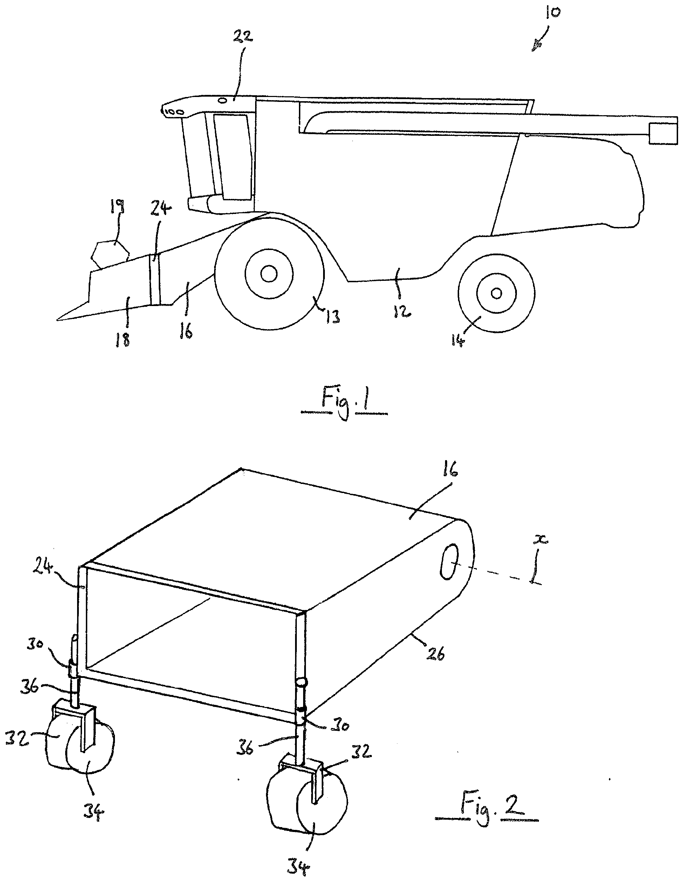

With reference to Figure 1 a combine harvester 10 comprises a chassis 12 which supports front wheels 13, rear steerable wheels 14 and a feederhouse 16 which is pivotally mounted to the chassis 12 about a pivot axis x. A crop gathering header 18 is detachably mounted to the front of feederhouse 16 and serves to cut and gather a standing crop and deliver the crop material to the feederhouse 16 through a central opening in the rear wall thereof. Also shown in Figure 1 is a driver's cab 22. Although described and illustrated as a cereal header for a combine harvester it will become apparent that the invention is also applicable to other types of header and harvester. By way of example the harvester may be a self-propelled forage harvester or windrower whilst the header may be a corn header or a pick-up header.

Header 18 is detachably mounted to the front of feederhouse 16 via a tilt frame 24 which is mounted to a main housing 26 of the feederhouse 16 in a manner which permits lateral tilt of the header 18 around a longitudinal pendulous axis and pitch adjustment around a transverse axis in a known manner. It should be understood however that the tilt frame 24 may be omitted wherein the header 18 is detachably mounted to the feederhouse 16 in a fixed positional relationship therewith.

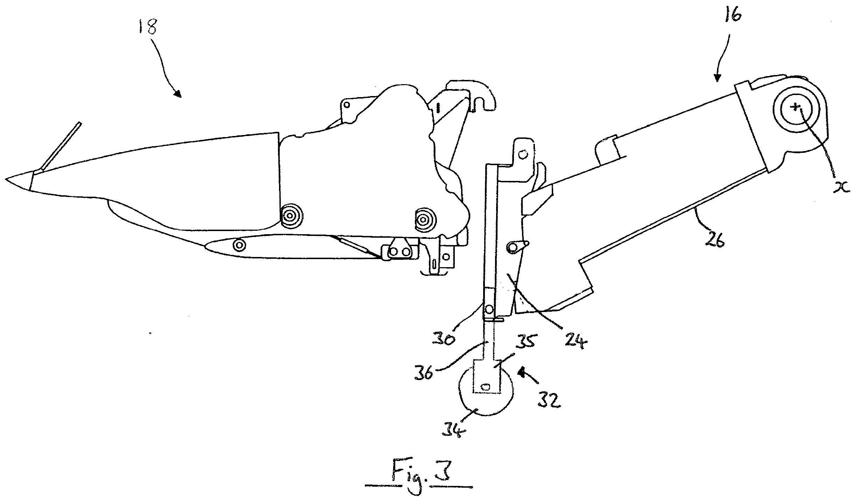

With reference to Figures 2 and 3, the main housing 26 comprises a pair of side walls, a top and a bottom, and defines a crop-conveying channel between an open front side and a rear side in the conventional manner. Although not shown for sake of simplicity, the main housing 26 houses a crop material conveyer, typically a chain and slat conveyor.

The feederhouse 16 and attached header 18 are raised and lowered together by pivoting movement around pivot axis x, typically controlled by a pair of hydraulic actuators (not shown) mounted between the chassis 12 and the underside of feederhouse 16. Raising and lowering of the feederhouse 16 is controlled manually by the operator and/or automatically by a ground-tracing system for example.

The feederhouse 16 has secured thereto a first pair of wheel assembly attachment means in the form of a pair of sleeves 30 which are welded to the outboard sides of the tilt frame 24. It should be understood that the sleeves 30 may instead be secured to the main housing 26 and/or may be secured by means other than welding. In the illustrated embodiment, the sleeves 30 are rigidly secured to the tilt frame 24 and aligned along a substantially upright axis. The sleeves 30 may be cast or machined steel for example.

In the transport mode shown, the header 18 is detached from the feederhouse 16 for transport, and is typically carried on a dedicated header trailer (not shown). In accordance with an aspect of the invention, a pair of wheel assemblies 32 are attached to the feederhouse 16, supported by the sleeves 30.

In more detail, each wheel assembly 32 comprises a castor wheel 34 mounted via a yoke 35 upon a respective spindle 36 which is received by one of the respective sleeves 30. The castor wheels 34 are free to rotate on their respective axes. Each spindle 36 is secured inside the sleeves 30 by means suitable to permit free rotation of the spindle 36 with respect to the sleeve 30. Alternatively, the yoke 35 may be mounted to the respective spindle 36 to permit relative rotation.

The wheels 34 can be put into contact with the ground by lowering the feederhouse 16. When in contact with the ground the wheels 34 provide supplemental ground support when in a transport mode. As a result the loading placed on the other wheels 13,14 can be reduced as required. Down pressure can be applied by appropriate control of the feederhouse position using the controlling hydraulic cylinders.

Moreover, by fixing the wheel assemblies 32 to the tilt frame 24, ground contact for both wheels on rough terrain can be improved by appropriate control of the tilt frame angle. For example, hydraulic cylinders (not shown) for controlling the tilt frame angle may be placed into a float mode so that the wheel assemblies 32 and tilt frame 24 can move to cater for any lateral irregularities in the terrain encountered.

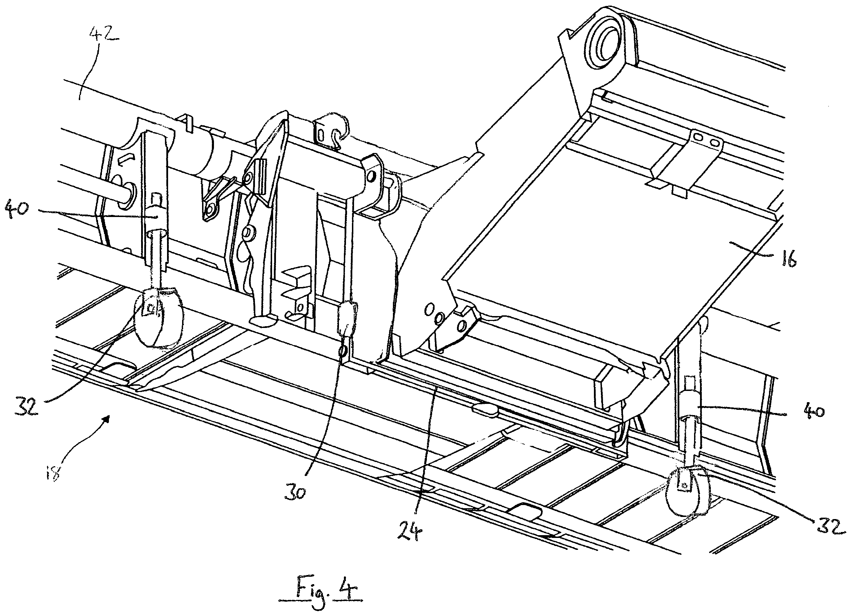

With reference to Figure 4, the header 18 is also provided with a pair of wheel assembly attachment means in the form of a pair of like sleeves 40 which are welded to a rear wall 42 of the header 18 in a laterally spaced-apart relationship. Although shown as being positioned between the lateral outboard ends of the header 18 and the feederhouse 16, it is envisaged that the wheel assembly attachment means may instead be positioned nearer to the opposite ends of the header 18.

The sleeves 40 provided on the header 18 are substantially the same as the sleeves 30 secured to the feederhouse 16 and are also rigidly secured to the header 18 to be aligned along a substantially upright axis. If alternative wheel assembly attachment means are provided on the feederhouse (for example spaced pins), then the same attachment mechanism should be provided on the header. In any case, the pair of wheel assemblies 32 should be attachable interchangeably to the header 18 and the feederhouse 16.

In accordance with an aspect of the invention, the wheel assemblies 32 can be removed from the feederhouse 16 by an operator and attached instead to the header 18 by inserting the spindles 36 through respective ones of the second pair of sleeves 40. Each spindle 36 may be secured inside the sleeves 40 by means suitable to permit free rotation of the spindle 36 with respect to the sleeve 40.

When attached to the header 18 in a harvesting mode (Figure 4), the wheels 34 may serve to carry a portion of the header weight and limit the height of a cutterbar. In an alternative arrangement (not illustrated) the header 18 further comprises a pair of adjustable gauge wheel support assemblies mounted to outer ends of the header, such as those disclosed in US-2015/0271999. The wheel assemblies 32 in this case are removeably attached to the gauge wheel support assemblies and serve as adjustable gauge wheels to control the ground clearance of the header.

Turning back to the embodiment shown in Figures 2, 3 and 4, it should be understood that the wheel assemblies 32 may be selectively attached to the feederhouse 16 and header 18 by many alternative attachment mechanisms which will be apparent to one of ordinary skill. For example, the sleeves 30, 40 may each be replaced with a pair of spaced-apart pins which are received in corresponding spaced bores provided in the spindles 36, the spindles being secured thereon by a lynch pin for example.

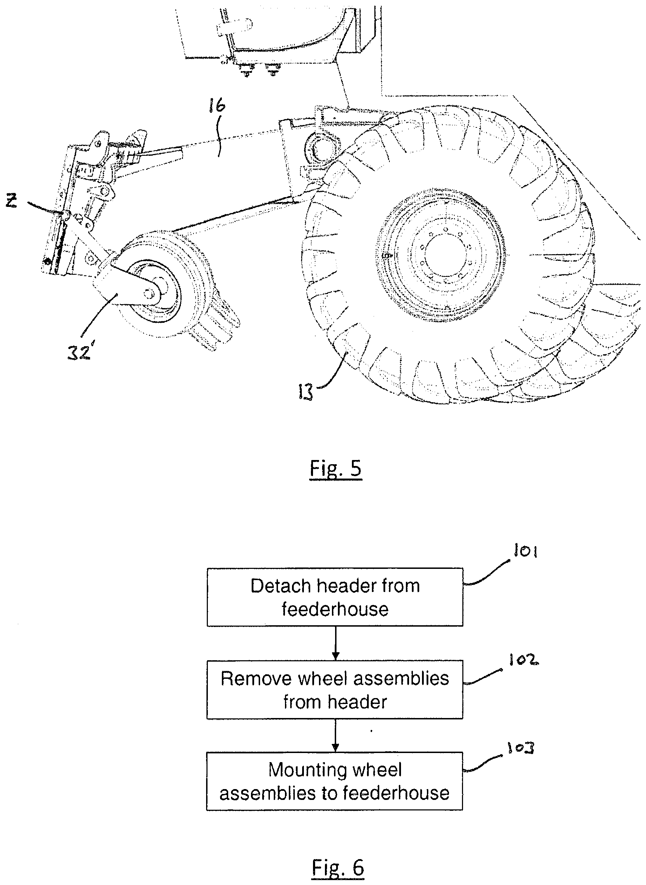

In an alternative embodiment shown in Figure 5, the wheel assembly attachment means provided on the feederhouse 16 permit selective pivoting of the wheel assemblies 32' around a transverse axis z so as to pivot the wheels 34' upwardly (either rearwardly or forwardly) when not required and/or when the header is attached.

### Operation

During transport between fields or on a highway, the header 18 is typically supported and moved on a dedicated header trailer. To provide supplemental ground support for the harvester, the wheel assemblies 32 are secured to the feederhouse 16 by securing the spindles 36 inside sleeves 30 or by other suitable attachment mechanism.

Before commencement of harvesting, or indeed before attaching the header 18, the operator can then either:
a. remove the wheel assemblies from the feederhouse; or,
b. pivot the wheel assemblies upwards (as shown in Figure 5).

In the case of removing the wheel assemblies, the operator may then reattach the wheel assemblies 32 to the header, preferably before the header 18 is removed from the header trailer. Advantageously, the wheel assemblies 32 are kept in a safe and secure place during harvest thus avoiding loss or damage.

After completion of a harvest operation, and before driving the harvester on a public highway, the header 18 is detached from the feederhouse 16 and supported on the header trailer, as illustrated as step 101 in Figure 6. The wheel assemblies 32 are removed from the header 18 (step 102) and reattached to the feederhouse 16 to provide supplemental ground support when travelling on the highway (step 103).

## Claims

1. An agricultural harvester comprising:
- a chassis (12);
- a feederhouse (16) pivotally mounted to the chassis;
- a header (18) for attachment to a front side of the feederhouse;
- a pair of wheel assemblies (32);
- **characterised in that** first and second pairs of wheel assembly attachment means (30, 40) are provided on the feederhouse (16) and the header (18) respectively allowing selective attachment of the wheel assemblies (32) to one of the feederhouse and header.

2. An agricultural harvester according to Claim 1, wherein each wheel assembly (32) comprises a wheel (34) mounted to a spindle (36), and wherein each wheel assembly attachment means (30, 40) is configured to receive and secure the spindle.

3. An agricultural harvester according to Claim 2, wherein the wheel is a castor wheel (34), and wherein the spindle (36) is upright when mounted to the header.

4. An agricultural harvester according to Claim 2 or 3, wherein each wheel assembly attachment means comprises a sleeve (30, 40) secured to one of the header (18) and feederhouse (16), the sleeve configured to receive the spindle (36) of a wheel assembly.

5. An agricultural harvester according to any preceding claim, wherein the first pair of wheel assembly attachment means (30, 40) s mounted to the feederhouse (16) to permit pivotal movement of the respective wheel assemblies (32) around a substantially transverse axis (z).

6. An agricultural harvester according to any preceding claim, wherein the feederhouse (16) comprises a main housing (26) and a tilt frame (24) mounted to a front side of the main housing, wherein the tilt frame is mounted to allow an attached header to tilt with respect to the chassis (12), and wherein the first pair of wheel assembly attachment means (30) are provided on the tilt frame.

7. An agricultural harvester according to any preceding claim, wherein the header (18) comprises a pair of adjustable gauge wheel support assemblies mounted to outer ends of the header, wherein the second wheel assembly attachment means form part of the gauge wheel support assemblies, and wherein the wheel assemblies (32) each serve as a gauge wheel when attached to the second wheel assembly attachment means.

8. A method of preparing an agricultural harvester for a transport mode, the harvester comprising a chassis (12), a feederhouse (16) pivotally mounted to the chassis, and a header (18) for attachment to a front side of the feederhouse, the method comprising the steps of:
- detaching the header from the feederhouse;
- removing a pair of wheel assemblies (32) from the header; and,
- mounting the wheel assemblies (32) to the feederhouse.

9. A method according to Claim 8, wherein each wheel assembly (32) comprises a wheel mounted to a spindle (36), and wherein the step of removing the pair of wheel assemblies from the header includes removing securing pins from a spindle sleeve to release the spindle.

10. A method according to Claim 8 or 9, further comprising the step of lowering the feederhouse (16) until the wheel assemblies (32) are in contact with the ground.

## Patentansprüche

1. Landwirtschaftliche Erntemaschine, mit:
- einem Chassis (12);
- einem Einzugsgehäuse (16), das schwenkbar an dem Chassis montiert ist;
- einem Vorsatzgerät (18) für eine Befestigung an einer Vorderseite des Einzugsgehäuses;
- einem Paar von Radanordnungen (32);
- **dadurch gekennzeichnet, dass** erste und zweite Paare von Radanordnungsbefestigungsmitteln (30, 40) an dem Einzugsgehäuse (16) bzw. dem Vorsatzgerät (18) bereitgestellt sind, die eine wahlweise Befestigung der Radanordnungen (32) an dem Einzugsgehäuse oder dem Vorsatzgerät ermöglichen.

2. Landwirtschaftliche Erntemasche nach Anspruch 1, wobei jede Radanordnung (32) ein an einer Welle (36) montiertes Rad (34), und wobei jedes Radanordnungsbefestigungsmittel (30, 40) konfiguriert ist, um die Welle aufzunehmen und zu sichern.

3. Landwirtschaftliche Erntemasche nach Anspruch 2, wobei das Rad eine Lenkrolle (34) ist und wobei sich die Welle (36) aufrecht erstreckt, wenn sie an dem Vorsatzgerät montiert ist.

4. Landwirtschaftliche Erntemasche nach Anspruch 2 oder 3, wobei jedes Radanordnungsbefestigungsmittel eine Hülse (30, 40) aufweist, die an dem Vorsatzgerät (80) oder dem Einzugsgehäuse (16) befestigt ist, wobei die Hülse konfiguriert ist, um die Welle (36) einer Radanordnung aufzunehmen.

5. Landwirtschaftliche Erntemasche nach Anspruch einem der vorhergehenden Ansprüche, wobei das erste Paar von Radanordnungsbefestigungsmitteln (30, 40) an dem Einzugsgehäuse (16) montiert ist, um eine Schwenkbewegung der entsprechenden Radanordnungen (32) um eine im Wesentlichen quer bzw. horizontal verlaufende Achse (z) zu gestatten.

6. Landwirtschaftliche Erntemasche nach Anspruch einem der vorhergehenden Ansprüche, wobei das Einzugsgehäuse (16) ein Hauptgehäuse (26) und einen Kipprahmen (24) aufweist, der an einer Vorderseite des Hauptgehäuses montiert ist, wobei der Kipprahmen montiert ist, um einem befestigten Vorsatzgerät ein Verkippen relativ zu dem Chassis (12) zu gestatten, und wobei das erste Paar von Radanordnungsbefestigungsmitteln (30) an dem Kipprahmen bereitgestellt ist.

7. Landwirtschaftliche Erntemasche nach Anspruch einem der vorhergehenden Ansprüche, wobei das Vorsatzgerät (18) ein Paar einstellbarer Messradlageranordnungen aufweist, die an äußeren Enden des Vorsatzgeräts montiert sind, wobei das zweite Radanordnungsbefestigungsmittel einen Teil der Messradlageranordnungen bilden, und wobei die Radanordnungen (32) jeweils als Messrad dienen, wenn sie an dem zweiten Radanordnungsbefestigungsmittel befestigt sind.

8. Verfahren zum Vorbereiten einer landwirtschaftlichen Erntemasche für einen Transportmodus, wobei die Erntemasche ein Chassis (12), ein schwenkbar an dem Chassis montiertes Einzugsgehäuse (16) und ein Vorsatzgerät (18) für eine Befestigung an einer Vorderseite des Einzugsgehäuses aufweist, wobei das Verfahren die folgenden Schritte aufweist:
- Lösen des Vorsatzgeräts von dem Einzugsgehäuse;
- Entfernen eines Paars von Radanordnungen (32) von dem Vorsatzgerät; und
- Montieren der Radanordnungen an dem Einzugsgehäuse.

9. Verfahren nach Anspruch 8, wobei jede Radanordnung (32) ein an einer Welle (36) montiertes Rad aufweist, und wobei der Schritt des Entfernens des Paars von Radanordnungen von dem Vorsatzgerät das Entfernen von Sicherungsstiften von einer Wellenhülse zum Freigeben der Welle aufweist.

10. Verfahren nach Anspruch 8 oder 9, weiterhin mit dem Schritt des Absenken des Einzugsgehäuses (16), bis die Radanordnungen (32) in Kontakt mit dem Boden sind.

## Revendications

1. Moissonneuse agricole comprenant :
un châssis (12) ;
un compartiment d'alimentation (16) monté de manière à pouvoir pivoter sur le châssis ;
une tête (18) destinée à être fixée sur un coté avant du compartiment d'alimentation ;
une paire d'ensembles de roue (32) ;
**caractérisée en ce que** les première et seconde paires de moyens de fixation d'ensemble de roue (30, 40) sont agencées sur le compartiment d'alimentation (16) et respectivement la tête (18), permettant une fixation sélective des ensembles de roue (32) sur l'un du compartiment d'alimentation et de la tête.

2. Moissonneuse agricole selon la revendication 1, dans laquelle chaque ensemble de roue (32) comprend une roue (34) montée sur une broche (36), et dans laquelle chaque moyen de fixation d'ensemble de roue (30, 40) est configuré de manière à recevoir et maintenir la broche.

3. Moissonneuse agricole selon la revendication 2, dans laquelle la roue est une roue articulée (34), et dans laquelle la broche (36) est verticale lorsqu'elle est montée sur la tête.

4. Moissonneuse agricole selon la revendication 2 ou 3, dans laquelle chaque moyen de fixation d'ensemble de roue comprend un manchon (30, 40) fixé sur l'un de la tête (18) et du compartiment d'alimentation (16), le manchon étant configuré de manière à recevoir la broche (36) d'un ensemble de roue.

5. Moissonneuse agricole selon l'une quelconque des revendications précédentes, dans laquelle la première paire de moyens de fixation d'ensemble de roue (30, 40) est montée sur le compartiment d'alimentation (16) afin de permettre le mouvement pivotant des ensembles de roues (32) respectifs par rapport à un axe sensiblement transversal (z).

6. Moissonneuse agricole selon l'une quelconque des revendications précédentes, dans laquelle le compartiment d'alimentation (16) comprend un logement principal (26) et un châssis basculant (24) monté sur un côté avant du logement principal, dans laquelle le châssis basculant est monté afin de permettre le basculement d'une tête fixée par rapport au châssis (12), et dans laquelle la première paire de moyens de fixation d'ensemble de roue (30) est agencée sur le châssis basculant.

7. Moissonneuse agricole selon l'une quelconque des revendications précédentes, dans laquelle la tête (18) comprend une paire d'ensembles de support de roue de mesure réglables montés sur les extrémités externes de la tête, dans laquelle le second moyen de fixation d'ensemble de roue forme une partie des ensembles de support de roue de mesure, et dans laquelle chacun des ensembles de roue (32) sert de roue de mesure lorsqu'il est fixé sur le second moyen de fixation d'ensemble de roue.

8. Procédé de préparation d'une moissonneuse agricole dans un mode de transport, la moissonneuse comprenant un châssis (12), un compartiment d'alimentation (16) monté de manière à pouvoir pivoter sur le châssis, et une tête (18) destinée à être fixée sur un côté avant du compartiment d'alimentation, le procédé comprenant les étapes de :
séparation de la tête du compartiment d'alimentation ;
dépose d'une paire d'ensembles de roue (32) de la tête ; et
montage des ensembles de roue (32) sur le compartiment d'alimentation.

9. Procédé selon la revendication 8, dans lequel chaque ensemble de roue (32) comprend une roue montée sur une broche (36) et dans lequel l'étape de dépose de la paire d'ensembles de roue par rapport à la tête comporte la dépose de broches de fixation par rapport à un manchon de broche afin de libérer la broche.

10. Procédé selon la revendication 8 ou 9, comprenant, en outre, l'étape de descente du compartiment d'alimentation (16) jusqu'à ce que les ensembles de roue (32) entrent en contact avec le sol.
